# EUROPEAN PATENT APPLICATION

(11) **EP 0 798 745 A1**
(43) Date of publication of application: **01.10.1997**
(21) Application number: 97302075.3
(22) Date of filing: 26.03.1997
(51) Int. Cl.: G21C 3/328

(54) **Water rod for boiling water nuclear reactor fuel bundle**

(30) Priority: 26.03.1996 US 621880
(71) Applicant: GENERAL ELECTRIC COMPANY, Schenectady, NY 12345 (US)
(72) Inventor: Johansson, Eric Bertil, Prescott, Arizona 86301 (US); Reese, Anthony Paul, Wilmington, North Carolina 28405 (US)
(74) Representative: Pedder, James Cuthbert

(57) **Abstract**

A water rod for a boiling water nuclear reactor fuel bundle includes an outer tube (60) having an upper end (62) and a lower end (64) adapted to be supported on a support structure; at least one coolant entry aperture in the lower end of the outer tube (60) and at least one coolant exit aperture (78) in the upper end of the tube (60). An inner tube (80) extends upwardly from the lower end (64), sized and is arranged to receive all coolant passing through the at least one coolant entry aperture (76), the inner tube (80) having a smaller cross section than the outer tube (60) for a major length portion of the outer tube (60) to thereby create a chamber (86) between the outer and inner tubes (60,80), the inner tube having an open upper end (84) terminating short of the upper end (74) of the outer tube (60).

## Description

This invention relates generally to boiling water nuclear reactor fuel bundles in general, and particularly to a new and improved water rod design for such bundles.

Conventional boiling water nuclear reactors incorporate fuel bundles which include an array of fuel rods and a central water rod (or rods) with coolant entry apertures at its lower end, and coolant exit apertures at its upper end. The water rod typically includes upper and lower connecting portions which are adapted to seat within mating sockets or bosses within upper and lower tie plates. Water enters the water rod through the coolant entry apertures in the lower reduced diameter end of the water rod, and flows upwardly into the larger diameter portion of the rod, and then exits through coolant exit apertures at the upper end of the water rod. The pressure difference driving this upward flow is defined by the pressure difference between the lower and upper parts of the fuel bundle.

The area of the coolant exit apertures at the upper end of the water rod is large, so that the exit pressure drop is small. The flow rate through the water rod is thus controlled by the resistance of the inlet holes and the passage into the large diameter portion of the water rod. The water in the water rod is heated by gamma-radiation and by heat conduction from the steam-water mixture outside the water rod. This heating of the water, and subsequent boiling, causes some void formation in the water rod. The amount of voids (also referred to as void percent or void fraction) formed depends on the flow rate through the water rod. In other words, at very low flow, the water rod would contain mostly steam whereas at high flow, it would contain almost entirely water.

As the bundle flow rate is reduced to natural circulation flow rates, the pressure drop through the fuel bundle decreases. Consequently, the pressure difference driving the water rod flow decreases. In current designs, the water rod inlet resistance is set to give a high water rod flow and a very low void fraction under all normal operating conditions.

The invention seeks to provide a water rod designed to have very low void fraction at reactor flows above typical operating flow rates, and to also have a rapid transition to almost complete voiding at low flow rates so that reactor power and flow oscillations are suppressed.

According to the invention, there is provided a water rod for a boiling water nuclear reactor fuel bundle including an outer tube having an upper end and a lower end adapted to be supported on a support structure; and at least one coolant entry aperture in said lower end of said outer tube and at least one coolant exit aperture in said upper end of said tube;
characterised by an inner tube extending upwardly from said lower end, sized and arranged to receive all coolant passing through said at least one coolant entry aperture, said inner tube having a smaller cross section than said outer tube for a major length portion of said outer tube to thereby create a chamber between said outer and inner tubes, said inner tube having an open upper end terminating short of said upper end of said outer tube.

This smaller inner tube may be arranged coaxially with a reduced cross-section portion in the lower end of the outer tube so that all coolant flowing into the water rod through the one or more coolant entry apertures must flow upwardly through the inner tube.

With this modified design, and at very low bundle flow rate, the bundle pressure difference will begin to raise the water level within the inner tube. Once the pressure difference reaches a certain level (about 4 psi), the water level within the inner tube will rise to the top of the inner tube and begin to spill over into an annular chamber defined by the radial spacing between the inner and outer tubes. For pressure differences at or below this level, the outer water rod is essentially empty, with the exception of water within the smaller diameter inner tube.

As the bundle pressure drop increases above this threshold level, the flow through the central tube will increase and the spillover will cause the water level within the outer tube to rise. As this is occurring, gamma-heating and conduction from the water and steam outside the water rod will cause the water rod temperature to rise to the boiling point, so that steam exits the coolant exit apertures as the water level rises. The transition to substantially completely liquid flow (with both tubes filled with liquid water) occurs rapidly, and at this stage, the modified water rods functions much like conventional water rods. As the bundle flow rate decreases and falls below the threshold value, the water in the outer tube is essentially boiled away and water remains only in the inner tube, with substantially 100% void friction in the outer tube. This rapid transition between stages suppresses reactor power and flow oscillations, due primarily to the reactivity effect of reducing the neutron moderation of the reactor.

The invention also includes a nuclear reactor fuel bundle comprising a channel; a lower support structure; a plurality of fuel rods and at least one water rod as described above extending upwardly from the lower support structure.

The invention will now be described in greater detail, by way of example, with reference to the drawings in which:
FIGURE 1 is a partial cross section of a conventional boiling water nuclear reactor fuel bundle assembly;
FIGURE 2A is an enlarged detail of the lower end of the water rod included in the fuel bundle assembly of claim 1;
FIGURE 2B is an enlarged detail of the upper end of the water rod included in the fuel bundle assembly of Figure 1;
FIGURE 3 is a simplified cross section of a water rod in accordance with an exemplary embodiment of this invention.

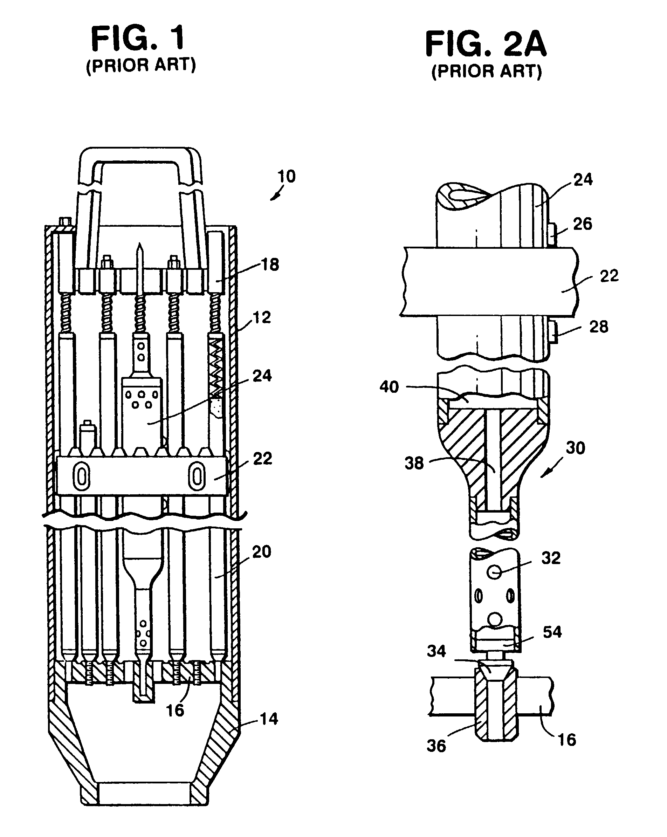

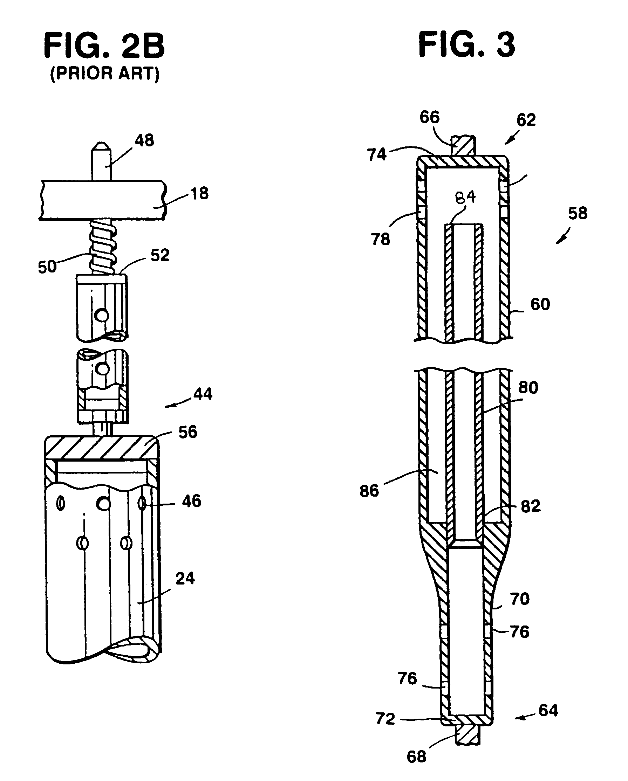

With reference to Figure 1, a conventional fuel bundle assembly for a boiling water nuclear reactor is shown at 10. The fuel bundle assembly includes a hollow tubular channel 12 connected at its lower end to a lower transition piece 14. The fuel bundle assembly also includes a lower tie plate 16 which may be formed integrally with the lower transition piece 14, or formed separately and supported on an internal flange of the lower transition piece. The fuel bundle assembly also includes an upper tie plate 18 and a plurality of fuel rods 20 extending between the upper and lower tie plates in conventional fashion. The fuel rods are supported laterally by a plurality of spacers 22 (only one shown) which are located at longitudinally spaced positions along the length of the fuel bundle. A centrally located water rod 24 also extends between the upper and lower tie plates. The lower and upper ends of the conventional water rod are shown in greater detail in Figures 2A and 2B. Note initially that it is the water rod 24 which carries the plurality of spacers 22, the latter oriented by means of tabs 26, 28 welded or otherwise secured to the outside surface of the water rod.

The lower end portion 30 of the water rod 24 includes a reduced diameter portion provided with a plurality of coolant entry apertures 32 as well as a lower connecting pin portion 34 which is adapted to seat within a socket 36 provided in the lower tie plate 16. As can also be seen from Figure 2A, coolant entering the coolant entry apertures 32 passes through a reduced diameter bore 38 before expanding into the larger diameter passage 40 defined by the water rod 24.

Turning now to Figure 2B, the upper end 44 of the water rod 24 includes a plurality of coolant exit apertures 46. The upper end also includes a pin connector 48 adapted to be received within the upper tie plate 18 in a conventional manner. As shown, a coil spring 50 acts between the upper tie plate 18 and a shoulder 52 to bias the water rod downwardly against the lower socket 36.

The upper and lower ends of the water rod 24 are closed by connector 34 at 54 and by cap 56, thus ensuring that all coolant enters the coolant entry apertures 32 and exits via coolant exit apertures 46. As noted throughout, this is a conventional construction and is shown here merely for purposes of comparison with the improved water rod construction as described in greater detail below.

With reference now to Figure 3, the water rod 58 in accordance with an exemplary embodiment of this invention includes a first outer tube 60 having an upper end 62 and a lower end 64. The upper end 62 may include a conventional connecting portion 66 (partially shown), while the lower end 66 may include a conventional connecting portion 68 (also partially shown). The connecting portions 66 and 68 are adapted to mate with appropriately designed sockets or bosses within support structures such as upper and lower tie plates, respectively. It should be understood, however, that the water rod construction described below is not limited to water rods which are secured between upper and lower tie plates as described hereinabove. See, for example, commonly owned application Serial No. 08/542,254 filed October 12, 1995.

The first outer tube 60 reduces down to a smaller diameter portion 70 which, in tum, is closed at its lower end 72. The relatively larger diameter portion of outer tube 60 is similarly closed at its upper end 74.

The reduced diameter portion 70 of the outer tube 60 is provided with a plurality of coolant entry apertures 76 while the upper end of the water rod is provided with a plurality of coolant exit apertures 78. In accordance with the exemplary embodiment of this invention, a second inner tube 80 is secured within the first outer tube 60. This inner tube is secured at its lower end 82 to the reduced diameter portion 70 of the first outer tube 60. In this regard, the inside diameter of the reduced diameter portion 70 of the outer tube is substantially the same as the inside diameter of the inner tube 80, with a slight reduction shown, due to the wall thickness of the inner tube as illustrated in Figure 4. It should be understood that the inside diameter of the reduced portion 74 could be counterbored to provide a step on which the inner tube 80 may be seated and welded, to create a substantially constant inside diameter as between portion 74 and inner tube 80. The inner tube 80 has an upper open end 84 which lies in axial proximity to the coolant exit apertures 78 and, as illustrated, lies axially adjacent and just below the coolant exit apertures 78. The smaller diameter inner tube 80 defines an annular space or chamber 86 between the inner tube 80 and the outer tube 60, the purpose for which will be described below.

It should be understood that other arrangements are contemplated vis-a-vis the location and connection of the inner tube vis-a-vis the water rod (i.e., outer tube). For example, the inner tube need not be concentric with the water rod, and the coolant could enter the water rod from the lower end thereof, rather than from a plurality of side entry apertures. In addition, neither the inner nor outer tubes need have a circular cross section.

In use, and in connection with the illustrated exemplary embodiment, water enters the lower end of the water rod via coolant entry apertures 76 and flows upwardly through the inner tube 80. Again, the pressure difference driving the water rod coolant flow is the pressure difference between the flow at the bottom and top of the fuel bundle assembly. At very low flow rates, the bundle pressure difference will result in a water level in the inner tube below its upper edge. As the bundle pressure difference increases, the water level within the inner tube 80 will rise. At a pressure difference of about 4 psi, the level will rise to the top of the tube 80 and water will begin to spill over the upper open end 84 into the annular chamber 86. Thus, at flows less than 4 psi bundle pressure drop, water fills the inner tube 80 but the outer tube 60 (i.e., chamber 86) is essentially empty.

As the bundle pressure drop increases above 4 psi, coolant flow through the inner tube 80 increases and the spillover causes the water level within the outer tube 60 to rise. Gamma-heating and conduction from the water and steam outside the water rod 58 causes the water rod temperature to rise to the boiling point and boiling then begins, with steam exiting the apertures 78. The water level in the outer tube 60 rises until the liquid loss due to boiling is equal to the rate of flow up through the central or inner tube 80. Calculations show that only a very small inflow is required to balance boiling when the outer tube 60 is full. This balance point is short lived, however, as the pressure drop increases and the outer tube fills with water which exits the apertures 78. Now the modified water rod 58 acts substantially as the conventional water rod, with liquid water filling the rod and exiting the apertures 78 with little or no void fraction.

When the flow rate decreases (as the pressure difference drops below 4 psi), water in the chamber 86 will boil away, with steam exiting the apertures 78, and with the water level receding below the upper edge of the inner tube 80 - thus quickly reaching a substantially complete void fraction in the outer tube at low flow rates.

In summary, the water rod 58 as disclosed here acts as an on-off switch. For a bundle pressure drop less than a critical value (approximately 4 psi in the example disclosed herein but this may vary), the outer tube contains steam and almost no water; on the other hand, for bundle pressure drops greater than the critical value, the outer tube is almost completely filled with liquid. In this way, reactor power and flow oscillations are suppressed since the water rod has a very low void percent at reactor flows above typical operating flow rates, with a rapid transition to almost complete void percentage at low flow rates. This is due to the reactivity effect of reducing the neutron moderation of the reactor, and this effect will suppress reactor power and flow oscillations and result in a more stable operating point.

## Claims

1. A water rod for a boiling water nuclear reactor fuel bundle including
an outer tube having an upper end and a lower end adapted to be supported on a support structure; and
at least one coolant entry aperture in said lower end of said outer tube and at least one coolant exit aperture in said upper end of said tube;
characterised by an inner tube extending upwardly from said lower end, sized and arranged to receive all coolant passing through said at least one coolant entry aperture, said inner tube having a smaller cross section than said outer tube for a major length portion of said outer tube to thereby create a chamber between said outer and inner tubes, said inner tube having an open upper end terminating short of said upper end of said outer tube.

2. The water rod of claim 1 wherein said lower end of said outer tube includes a reduced diameter portion substantially equal to an inside diameter of said inner tube.

3. The water rod of claim 1 or 2 wherein said open upper end of said inner tube lies axially adjacent and below said at least one coolant exit aperture.

4. The water rod of claim 1, 2 or 3, wherein said water rod is closed at its upper and lower ends.

5. The water rod of any preceding claim, wherein said lower connecting portion includes a first stem adapted to seat within a socket provided in a lower tie plate.

6. The water rod of claim 5 wherein said upper connecting portion includes a second stem adapted to seat within a socket provided in an upper tie plate.

7. A nuclear reactor fuel bundle comprising a channel; a lower support structure; a plurality of fuel rods and at least one water rod as claimed in any one of claims 1 to 6 and extending upwardly from said lower support structure.
